# FASCICULE DE BREVET EUROPEEN

(11) **EP 0 419 314 B1**
(45) Date de publication et mention de la délivrance du brevet: **17.05.1995**
(21) Numéro de dépôt: 90402459.3
(22) Date de dépôt: 07.09.1990
(51) Int. Cl.: C08F 20/12, C08F 8/12, C08F 8/14

(54) **Procédé de fabrication de macromonomères (méth)acryliques fonctionnalisés et macromonomères obtenus**
Verfahren zur Herstellung von funktionellen (Meth)acrylat-Macromonomere und so hergestellte Macromonomere
Process for preparing functionalised (meth)acrylic macromonomers and macromonomers so prepared

(30) Priorité: 08.09.1989 FR 8911756
(43) Date de publication de la demande: 27.03.1991
(73) Titulaire: ELF ATOCHEM S.A., 92800 Puteaux (FR)
(72) Inventeur: Rempp, Paul, F-67100 Strasbourg (FR); Gnanou, Yves, F-67000 Strasbourg (FR); Fayt, Roger, B-4121 Neupre (BE); Jacobs, Christian, B-4342 Hognoul (BE); Teyssie, Philippe, B-4121 Neuville en Condroz (BE); Varshney, Sunil K., B-4030 Grivegnée (BE)
(74) Mandataire: Chaillot, Geneviève

(56) Documents cités:
- US-A- 4 246 370
- POLYMER BULLETIN, vol. 12, juillet 1984, pages 79-85, Springer Verlag, Heidelberg, DE; P. LUTZ et al.: "Anionic polymerization. Synthesis and characterization of polyalkylmethacrylate macromonomers"

## Description

La présente invention porte sur un procédé de fabrication de macromonomères méthacryliques et acryliques fonctionnalisés, ainsi que sur de nouveaux macromonomères pouvant être obtenus par ce procédé.

Les macromonomères sont des intermédiaires utiles dans la synthèse de copolymères greffés.

Il est bien connu que les esters méthacryliques peuvent être polymérisés par voie anionique en espèces polymères linéaires de masse moléculaire connue et de faible polydispersité. Il a également été établi que des fonctionnalisations à une extrémité de la chaîne sont possibles dans des conditions spécifiques. Des macromonomères de divers poly(méthacrylates d'alkyle), dotés à une extrémité de chaîne, soit d'une fonction styrène, soit d'une fonction ester méthacrylique, ont été obtenus et caractérisés avec soin (voir P.Lutz, P.Masson, G.Beinert, P.Rempp, Poly.Bul. 12, 79(1984)).

De même, S.D. Smith, dans Polymer Preprints Vol 29, n°2, 1988, LN° 3776, pages 48 et 49, décrit des macromonomères de méthacrylate de méthyle dotés à une extrémité de chaîne d'une fonction vinylique (par suite de l'utilisation, comme agent de terminaison, du chlorure de vinyl-4 benzoyle), ou encore d'un anion O⁻ (par suite de l'utilisation, comme agent de terminaison, de benzaldéhyde), avec possibilité de faire réagir ensuite cet anion avec des réactifs comme le chlorure de méthacryloyle et le chlorométhylstyrène, ou bien d'obtenir des macromonomères à fonctionnalité hydroxyle.

Le cas des esters acryliques est totalement différent. L'existence de réactions secondaires empêche la polymérisation anionique de ces monomères de fournir des espèces polymères bien définies, même dans des conditions rigoureuses : monomère et solvant hautement purifiés, très basse température. L'apparition de réactions de transfert explique les faibles valeurs de la masse moléculaire moyenne et la largeur de la distribution des masses moléculaires.

La polymérisation par transfert de groupe s'est révélée fournir un chemin pour la polymérisation contrôlée de plusieurs monomères acryliques, si des acides de Lewis sont utilisés pour catalyser le procédé. Des fonctionnalisations en extrémité de chaîne sont également possibles, bien qu'elles ne soient pas toujours quantitatives. L'apparition de réactions secondaires ne peut être entièrement négligée, contrairement à ce qui est observé dans le cas des esters méthacryliques.

La demande de brevet japonais publiée n° 62-232408 décrit la préparation de polymères acryliques présentant des groupements fonctionnels terminaux par polymérisation radicalaire en continu en présence d'agents de transfert de chaîne de type mercaptan. Les produits obtenus conviennent pour la copolymérisation de greffage, car leur masse moléculaire moyenne en nombre est comprise entre 1 000 et 30 000. On décrit notamment la préparation de macromonomères d'acrylate de butyle présentant un groupe terminal carboxylique par polymérisation en présence d'acide mercapto-3 propionique. En faisant réagir le groupe carboxylique terminal avec du méthacrylate de glycidyle, on obtient un macromonomère d'acrylate de butyle à groupe terminal méthacryloyloxy, dont l'indice de polydispersité est d'environ 1,8. Si l'on utilise un mercapto-2 éthanol à la première étape, on obtient un polymère à groupe terminal hydroxyle.

La demande de brevet européen n° 185 641 porte sur un procédé de polymérisation de monomères acryliques ou méthacryliques à l'aide d'agents amorceurs de polymérisation de formule R-M, où M désigne un métal alcalin ou alcalinoterreux et R un radical alkyle à chaîne droite ou ramifiée en C₂-C₆ ou un radical aryle, la polymérisation étant effectuée en présence d'un additif constitué d'un sel de métal alcalin ou alcalino-terreux d'un acide minéral. Ainsi, l'acrylate de tert.-butyle peut être polymérisé par voie anionique, avec des rendements quantitatifs, si l'on utilise un système initiateur composé de sec-butyllithium et de chlorure de lithium en solution dans le tétrahydrofuranne. Le contrôle de la masse moléculaire et de la polydispersité des échantillons est possible, ce qui signifie qu'il ne se produit ni réaction de terminaison, ni réaction de transfert. La présence de chlorure de lithium semble modifier l'environnement des sites ioniques en croissance. Les réactions secondaires, qui étaient connues se produire sur les groupes carbonyle et sur les hydrogènes acides en alpha des motifs monomères sont considérablement réduites. Ce procédé constitue un perfectionnement important par rapport aux tentatives préalables pour polymériser ces monomères acryliques par voie anionique.

Dans cette demande de brevet européen, il est décrit, en Exemple 20, la préparation d'un polyacrylate de tert.-butyle à fonctions carboxyliques terminales. Cette fonctionnalisation est obtenue par introduction de CO₂ gazeux dans le milieu réactionnel contenant le polyanion vivant.

La présente invention a pour but de proposer un procédé de fabrication par voie anionique de macromonomères acryliques ou méthacryliques présentant de nouvelles fonctionnalisations, ainsi qui des fonctionnalisations aux deux extrémités des chaînes. L'invention a également pour but de proposer de nouveaux macromonomères qui sont notamment des macromonomères acryliques fonctionnalisés à une extrémité de la chaîne et ayant une faible dispersité des masses moléculaires, ainsi que des macromonomères acryliques ou méthacryliques fonctionnalisés aux deux extrémités de la chaîne.

La présente invention a donc d'abord pour objet un procédé de fabrication de macromonomères (méth)acryliques fonctionnalisés, de formule :

(PA)ₙ-F ou F-PA-F

où :
- PA représente une séquence polymère issue d'un monomère A choisi parmi les monomères méthacryliques et les monomères acryliques ;
- n est un nombre entier valant 1, 2 ou 3 ;
- F est un groupement terminé par O⁻, par OH ou par un radical vinylique, avec la condition que F est un groupement terminé par O⁻ ou par OH lorsque PA est une séquence méthacrylique et n est égal à 1 ;
caractérisé par le fait que :
(a) dans une première étape, on conduit la polymérisation anionique d'un monomère A, à l'aide d'un système initiateur capable de conduire à la formation d'une séquence polymère vivante PA⁻ ou ⁻PA⁻ et constitué par au moins un amorceur monofonctionnel si l'on vise à obtenir une séquence PA⁻ ou au moins un amorceur bifonctionnel si l'on vise à obtenir une séquence ⁻PA⁻, et au moins un ligand ;
(b) dans une seconde étape, on fait réagir le chaînon vivant ainsi obtenu avec un agent de fonctionnalisation pour obtenir un macromonomère présentant une ou deux terminaisons vinyliques ou -O⁻,
(c) le cas échéant, dans le cas où le macromonomère obtenu à l'étape (b) présente au moins une terminaison -O⁻, il est mis à réagir avec un second agent de fonctionnalisation pour obtenir un macromonomère présentant au moins une terminaison OH ou vinylique,
(d) le cas échéant, dans le cas où le macromonomère obtenu à l'étape (c) présente une terminaison vinylique, on conduit une transestérification en milieu acide des fonctions acryliques du macromonomère obtenu ou bien une hydrolyse dudit macromonomère suivie le cas échéant d'une saponification.

A titre d'exemple de monomères méthacryliques de base des macromonomères de l'invention, on peut citer les méthacrylate d'alkyle dont le radical alkyle, le cas échéant substitué par exemple par au moins un atome d'halogène comme le chlore ou le fluor contient 1 à 18 atomes de carbone, comme les méthacrylates de méthyle, d'éthyle, de trifluoro-2,2,2 éthyle, de n-propyle, d'isopropyle, de n-butyle, de sec.-butyle, de tert.-butyle, de n-amyle, d'i-amyle, d'hexyle, d'éthyl-2 hexyle, de cyclohexyle, d'octyle, d'i-octyle, de décyle, ainsi que le méthacrylate de glycidyle, le méthacrylate de norbornyle, le méthacrylonitrile et les dialkylméthacrylamides.

A titre d'exemples de monomères acryliques de base des macromonomères de l'invention, on peut citer les acrylates d'alkyle primaire, secondaire ou tertiaire, dont le groupe alkyle, le cas échéant substitué par exemple par au moins un atome d'halogène, tel que le chlore ou le fluor, contient de 1 à 18 atomes de carbone, en mentionnant plus particulièrement, l'acrylate d'éthyle, l'acrylate de propyle, l'acrylate d'isopropyle, l'acrylate de butyle, l'acrylate d'isobutyle, l'acrylate d'hexyle, l'acrylate de tertiobutyle, l'acrylate d'éthyl-2 hexyle, l'acrylate de nonyle, l'acrylate de lauryle, l'acrylate de stéaryle, l'acrylate de cyclohexyle, l'acrylate d'isodécyle, ainsi que l'acrylate de phényle, l'acrylate d'isobornyle, les acrylates d'alkylthioalkyle ou d'alcoxyalkyle, l'acrylonitrile et les N-dialkylacrylamides.

L'amorceur monofonctionnel peut être choisi notamment parmi les composés de formule :

(R)ₚ-M

dans laquelle :
- M désigne un métal alcalin ou alcalino-terreux (valence p de 1 ou 2) ; et
- R désigne un radical alkyle à chaîne droite ou ramifiée contenant 2 à 6 atomes de carbone, ou un radical aryle, éventuellement substitué, ou un radical alkyle contenant 1 à 6 atomes de carbone substitué par au moins un groupe phényle ;
et les composés de formule :

(C₆H₅)₂CHM′

dans laquelle M′ est choisi parmi le lithium, le sodium et le potassium.

De tels amorceurs monofonctionnels sont, par exemple, le sec.-butyllithium, le n-butyllithium, le fluorényllithium, l'alphaméthylstyryllithium, le 1,1-diphénylhexyllithium (DPHLi), le diphénylméthyl-lithium ou -sodium ou -potassium et le 1,1-diphényl-3-méthylpentyllithium.

l'amorceur bifonctionnel peut être choisi notamment parmi des composés tels que le 1,4-dilithio-1,1,4,4-tétraphénylbutane, le 1,4-disodio-1,1,4,4-tétraphénylbutane, le naphtalène sodium, le naphtalène lithium, le naphtalène potassium et leurs homologues.

Le ligand peut être choisi parmi, d'une part, les sels minéraux de métaux alcalins ou alcalino-terreux par exemple, les chlorures, fluorures, bromures, iodures, borures, sulfates, nitrates et borates, et, d'autre part, les sels organiques de métaux alcalins, par exemple, les alcoolates, les esters d'acide carboxylique substitué en position alpha par ledit métal et les composés dans lesquels ledit métal alcalin est associé à un groupe tel que :
(A) les groupes de formule : 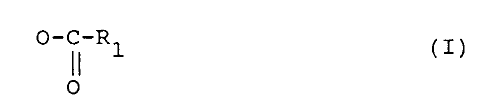 dans laquelle R₁ est un radical alkyle linéaire ou ramifié possédant de 1 à 20 atomes de carbone, ou bien un radical cycloalkyle possédant de 3 à 20 atomes de carbone, ou encore un radical aryle possédant de 6 à 14 atomes de carbone,
(B) les groupes de formule : 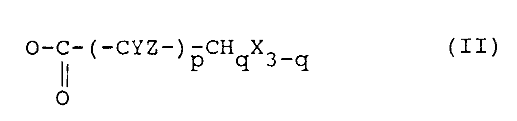 dans laquelle :
   - Y et Z, identiques ou différents l'un de l'autre, sont choisis parmi l'atome d'hydrogène et les atomes d'halogène ;
   - p est un nombre entier allant de 0 à 4,
   - X est un atome d'halogène, et
   - q est un nombre entier allant de 0 à 2,
(C) les groupes de formule :

   O-SO₂-CT₃ (III)

   dans laquelle T est choisi parmi l'atome d'hydrogène et les atomes d'halogène, et
(D) les groupes de formule :

   B(R₂)₄ (IV)

   dans laquelle R₂ est choisi parmi l'atome d'hydrogène et les radicaux alkyle et aryle.

Des exemples de groupes de formule (I) sont les groupes acétate, propionate et benzoate. Des exemples de groupes de formule (II) sont les groupes alpha-bromoacétate et trifluoroacétate. Des exemples de groupes de formule (III) sont les groupes trifluorométhane sulfonique et méthanesulfonique. Des exemples de groupes (IV) sont les groupes borohydrure et tétraphénylborure.

Le ligand peut être également constitué par un agent complexant macrocyclique non azoté, choisi notamment parmi les polyéthers cycliques (encore dénommés éthers-couronne) et les polythioéthers cycliques, tels que notamment des polyéthers macrocycliques dont l'anneau macrocyclique contient au moins 14 atomes de carbone et d'oxygène, chaque atome d'oxygène de l'anneau étant séparé des autres atomes d'oxygène de l'anneau par deux ou bien trois atomes de carbone : de tels polyéthers macrocycliques ont déjà été décrits dans les brevets américains n° 3 687 978 et n° 4 826 941.

A l'étape (a) du procédé selon l'invention, la proportion de ligand utilisé peut varier fortement par rapport à l'amorceur. Cette quantité peut être, par exemple, largement excédentaire par rapport à la quantité molaire d'agent amorceur. Cette quantité peut aussi être égale ou inférieure à la quantité molaire d'agent amorceur. De préférence, le ligand est introduit dans une proportion molaire vis-à-vis de l'amorceur au moins égale à 0,3 et allant jusqu'à 50 environ.

Dans le procédé suivant l'invention, la polymérisation de l'étape (a) s'effectue en l'absence d'humidité et d'oxygène, et en présence d'au moins un solvant choisi, de préférence, parmi les solvants aromatiques, tels que le benzène et le toluène, ou bien le tétrahydrofuranne, le diglyme, le tétraglyme, l'orthoterphényle, le biphényle, la décaline, la tétraline, ou le diméthylformamide.

Quant à la température de polymérisation, elle peut varier entre environ -78°C et 20°C, et peut même atteindre 60°C lorsque le ligand est un alcoolate alcalin.

On conduit l'étape (b) du procédé selon l'invention dans le même milieu réactionnel que l'étape (a), à une température comprise entre environ -78°C et 0°C, avec un rapport molaire de l'agent de fonctionnalisation à l'amorceur généralement compris entre environ 1 et 10.

A cette étape (b), on peut utiliser, comme agent de fonctionnalisation, un monohalogénure vinylique conduisant à un polymère de formule PA-F ou F-PA-F, suivant que l'on a utilisé un amorceur mono- ou bifonctionnel. Parmi les monohalogénures vinyliques utilisables, on peut citer le bromure de p-vinylbenzyle, le méthacrylate de chlorodiméthylsilylpropyle (obtenu par hydrosilylation mettant en jeu le diméthylchlorosilane et le méthacrylate d'allyle), le chlorure de méthacryloyle, le chlorure de 4-vinylbenzoyle, le 4-(chlorodiméthylsilyl)styrène et le 4-(chlorodiméthylsilyl)alphaméthylstyrène. Ces deux derniers agents peuvent être préparés par réaction du chlorure de 4-vinylbenzyl magnésium avec du dichlorodiméthylsilane dans le tétrahydrofuranne à 0°C, selon le schéma réactionnel suivant : 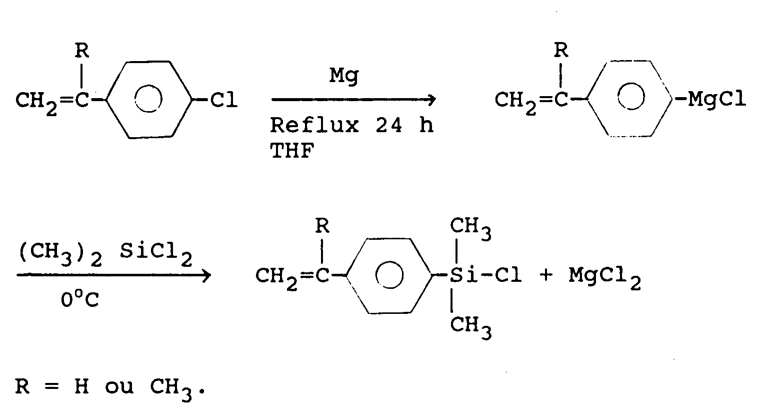
On peut également utiliser comme agent de fonctionnalisation un aldéhyde de formule : 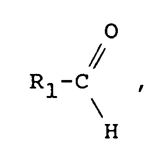
dans laquelle R₁ représente un groupe hydrocarboné, de préférence aromatique, substitué ou non,
ce qui conduit à un macromonomère de formule : 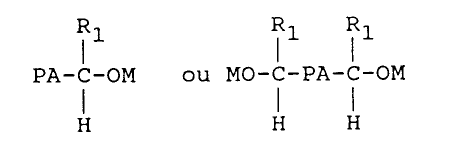
suivant que l'amorceur utilisé est mono- ou bifonctionnel, M représentant le métal de l'amorceur, les terminaisons OM étant, à l'étape (c), transformées en terminaisons OH par désactivation par un agent protonique, tel que l'eau ou un alcool, ou bien, par réaction avec un halogénure HalF′, F′ comportant une fonction vinylique terminale, en terminaisons O-F′.

Comme aldéhydes, on peut citer le benzaldéhyde et l'anthracénylaldéhyde, et comme halogénure HalF′, on peut citer tous les chlorures d'acides, par exemple le chlorure de méthacryloyle.

On peut également utiliser, comme agent de fonctionnalisation, un bi- ou trihalogénure de formule (Hal)_{2 ou 3}F˝, où F˝ est un groupement à terminaison vinylique, ce qui permet d'obtenir le macromonomère de formule (PA)_{2 ou 3}-F. A titre d'exemples de ces bi- ou trihalogénures, on peut citer le 4-(dichlorométhylsilyl)styrène et le 4-(trichlorométhylsilyl)styrène et leurs homologues dérivés de l'alphaméthylstyrène.

Les macromonomères selon l'invention peuvent être hydrolysés à une température allant de 70° à 170°C environ, sous une pression allant de 1 à 15 bars et en présence de 0,5 à 10% environ en poids, par rapport au macromonomère, d'un catalyseur acide tel que l'acide paratoluène sulfonique, l'acide méthane toluène sulfonique ou l'acide chlorhydrique, dans un solvant tel que le dioxanne, le toluène, le tétrahydrofuranne, le diglyme, la diméthylisobutylcétone ou un mélange de solvants permettant d'opérer en phase homogène. Après hydrolyse, les macromonomères peuvent être précipités dans l'heptane, filtrés, lavés pour éliminer toute trace de catalyseur et finalement séchés. Ils peuvent aussi être ultérieurement neutralisés au moyen de potasse méthanolique ou encore d'hydroxyde de tétraméthylammonium en solution dans un mélange de toluène et de méthanol afin de former les macro-ionomères ou macro-monomères polyélectrolytes correspondants.

Lorsque les macromonomères selon l'invention comportent une séquence dérivée d'un acrylate d'alkyle tertiaire ou secondaire, cette séquence peut également être transestérifiée de manière connue en une séquence d'un acrylate d'alkyle primaire.

L'invention porte également sur un macromonomère de formule :

PA-F

où :
- PA représente une séquence polymère issue d'un monomère acrylique ; et
- F est un groupement terminé par OH, par O⁻ ou par un radical vinylique, présentant une masse moléculaire moyenne en nombre comprise entre environ 1000 et 300000, et un indice de polydispersité compris entre 1,05 et 1,5 environ.

L'invention porte également sur un macromonomère de formule :

(PA)ₙ-F ou F-PA-F,

où :
- PA représente une séquence polymère issue d'un monomère A choisi parmi les monomères méthacryliques et les monomères acryliques ;
- n est un nombre entier valant 2 ou 3 ;
- F est un groupement terminé par O⁻, par OH par un radical vinylique.

Ces derniers macromonomères présentent généralement une masse moléculaire moyenne en nombre comprise entre environ 1000 et 500000, et un indice de polydispersité compris entre environ 1,05 et 2.

Les Exemples suivants illustrent la présente invention.

Dans ces Exemples :
tBA = acrylate de tert.-butyle
MMA = méthacrylate de méthyle
α-MeSt = alphaméthylstyrène
THF = tétrahydrofuranne
Na Napht. = naphtalène sodium.

### Exemple 1

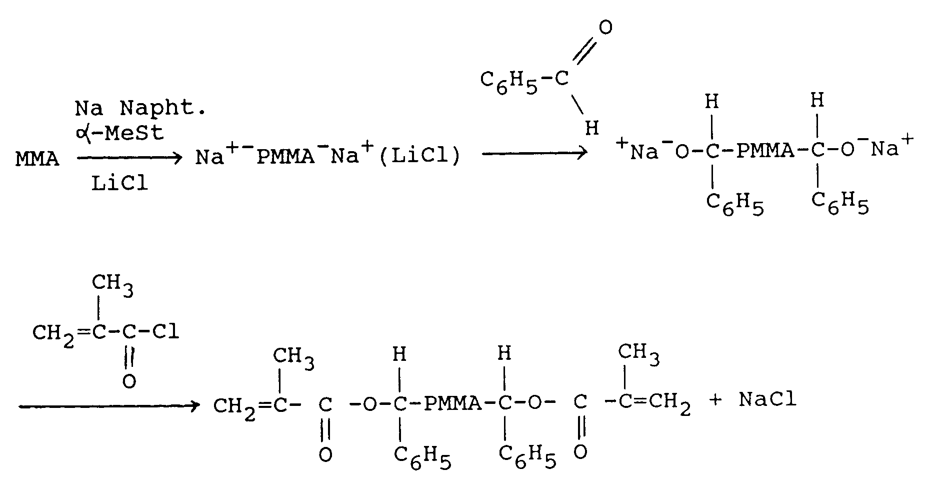

Les solvants utilisés sont purifiés par les techniques habituelles de la polymérisation anionique ; le méthacrylate de méthyle est traité successivement par l'hydrure de calcium et le triéthylaluminium.

Dans un ballon préalablement séché et sous atmosphère d'azote, on introduit 3 x 10⁻² mole de chlorure de lithium préalablement purifié et conservé en l'absence de lumière. On y ajoute 300 ml de THF pré-séché, et, sous agitation 6 x 10⁻³ mole de Na Napht. et 6 x 10⁻² mole d'α-MeSt.

On porte le mélange à la température de -78°C au moyen d'un mélange d'acétone et de carboglace, puis on ajoute 9,4 g de méthacrylate de méthyle dans le toluène.

La polymérisation du méthacrylate de méthyle est donc amorcée dans le THF à -78°C par un composé organosodique obtenu préalablement par réaction de Na Napht. avec un excès (10 fois) d'α-MeSt en présence de 5 moles de LiCl par mole de ce composé organosodique.

On obtient ainsi, au bout de 15 minutes, le macrodianion ⁻PMMA⁻, dont l'analyse par GPC révèle une masse moléculaire M̅n̅ de 3300 et un indice de polydispersité M̅w̅/M̅n̅ de 1,07.

On ajoute ensuite au milieu réactionnel du benzaldéhyde en excés (rapport molaire benzaldéhyde/amorceur = 3), qu'on laisse réagir 1 heure à -78°C, puis du chlorure de méthacryloyle (en excés de 4 fois par rapport à l'amorceur). Au bout d'1 heure, la réaction est stoppée et le polymère est précipité de sa solution par un large excés de méthanol. Le produit est alors séché sous vide et soumis à l'analyse RMN. Cette dernière révèle une fonctionnalisation de 100% en groupements vinyliques.

### Exemple 2

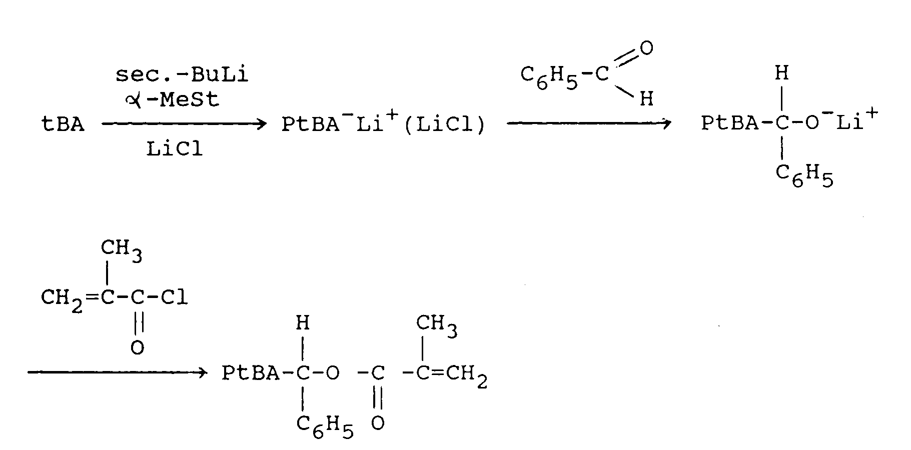

On reproduit la procédure expérimentale de l'Exemple 1 en modifiant les ingrédients et/ou les quantités utilisées comme suit :
THF = 200 ml
sec.-BuLi = 3,7 x 10⁻³ mole
α-MeSt = 3,7 x 10⁻² mole
tBuA = 6 g.

On laisse la polymérisation se poursuivre pendant 15 minutes. Dans ces conditions, on obtient un anion PtBA⁻ avec un M̅n̅ de 1700 et un indice de polydispersité de 1,1.

On ajoute au mélange réactionnel à -78°C, 1,2 ml de benzaldéhyde et on laisse réagir pendant 1 heure ; puis, toujours à cette température, on ajoute 1,5 ml de chlorure de méthacryloyle et on laisse réagir pendant 1 heure. On laisse alors le mélange réactionnel se réchauffer jusqu'à la température ambiante. Le polymère est précipité de sa solution par un mélange eau/méthanol et on termine comme à l'Exemple 1.

L'analyse RMN indique une fonctionnalisation quantitative.

### Exemple 3

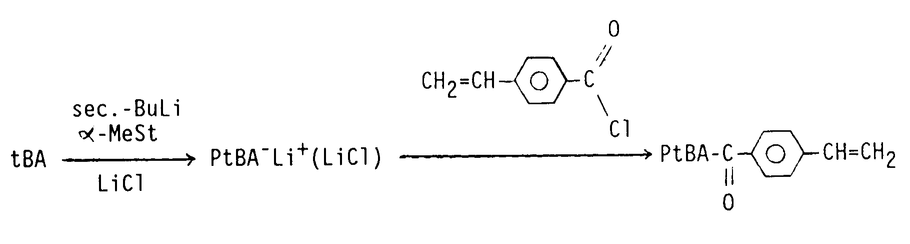

On reproduit la procédure expérimentale de la préparation du macroanion de l'Exemple 2, en modifiant les ingrédients et/ou les quantités de la façon suivante :
THF = 150 ml
sec.-BuLi = 1,7 x 10⁻³ mole
Rapport molaire LiCl/amorceur = 10
tBuA = 4,4 g
On laisse la polymérisation se poursuivre pendant 10 minutes. Dans ces conditions, on obtient un anion PtBA⁻ avec un M̅n̅ de 3000 et un indice de polydispersité de 1.16.

On ajoute ensuite au milieu réactionnel, à la même température, 3 x 10⁻³ moles de chlorure de 4-vinylbenzoyle. Au bout de 4 heures, la réaction est stoppée et on procède ensuite comme à l'Exemple 2.

l'analyse GPC (UV) à 292 nm démontre la présence de groupements vinylbenzéniques. La fonctionnalisation peut être estimée comme étant supérieure à 80%.

### Exemple 4

On procède comme à l'Exemple 3, mais on conduit la fonctionnalisation par le chlorure de 4-vinylbenzoyle à -40°C. Les résultats sont analogues à ceux de l'Exemple 3.

### Exemple 5

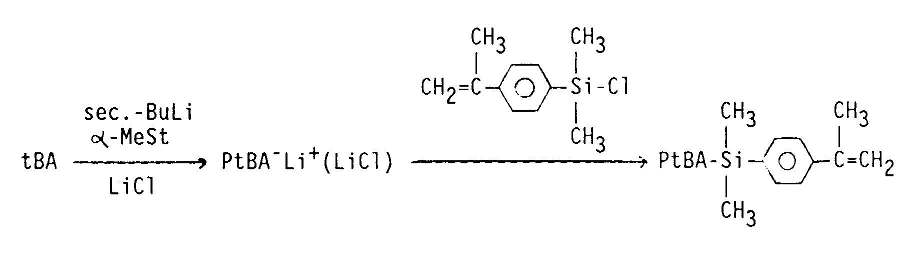

On reproduit la procédure expérimentale de la préparation du macroanion de l'Exemple 2, en modifiant les ingrédients et/ou les quantités introduites comme suit :
THF = 100 ml
sec.-BuLi = 2,4 x 10⁻³ mole
tBA = 5 g
On laisse la polymérisation se poursuivre pendant 10 minutes. Dans ces conditions, on obtient un anion PtBA⁻ avec un M̅n̅ de 2000 et un indice de polydispersité de 1,07.

On ajoute ensuite au milieu réactionnel, à -40°C, 4,8 x 10⁻³ mole de 4-(chlorodiméthylsilyl)α-méthylstyrène. Au bout de 4 heures, la réaction est stoppée et on procède ensuite comme à l'Exemple 2.

L'analyse RMN du proton a permis de démontrer que les rendements de fonctionnalisation sont supérieurs à 75%.

### Exemple 6

On procède comme à l'Exemple 5, mais on utilise, comme agent de fonctionnalisation, le 4-(chlorodiméthylsilyl)styrène.

L'analyse RMN du proton a permis de démontrer que les rendements de fonctionnalisation sont supérieurs à 75%.

### Exemple 7

On procède comme à l'Exemple 6, mais on utilise 3,7 x 10⁻³ mole de sec.-BuLi comme amorceur à la première étape de préparation du macroanion. Celui-ci présente un M̅n̅ de 1400 et un indice de polydispersité de 1,20.

On conduit la fonctionnalisation avec le 4-(chlorodiméthylsilyl)styrène à -78°C pendant 4 heures.

### Exemple 8

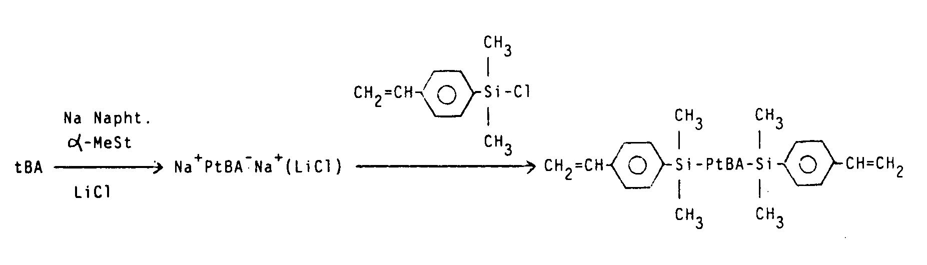

On procède comme à l'Exemple 1, en utilisant les substances et quantités suivantes :
THF = 150 ml
Na Napht. = 5 x 10⁻³ mole
LiCl = 2,4 x 10⁻² mole
tBuA = 4,4 g
On laisse la polymérisation se poursuivre pendant 10 minutes à -78°C. On obtient un macroanion présentant un M̅n̅ de 2300 et un indice de polydispersité de 1,28.

Dans le milieu réactionnel, toujours maintenu à -78°C, on ajoute 1,5 x 10⁻² moles de 4-(chlorodiméthylsilyl)styrène et on poursuit la réaction pendant 1 heure.

L'analyse GPC (UV) à 292 nm démontre la présence de groupements vinyl benzéniques.

### Exemples 9 à 12

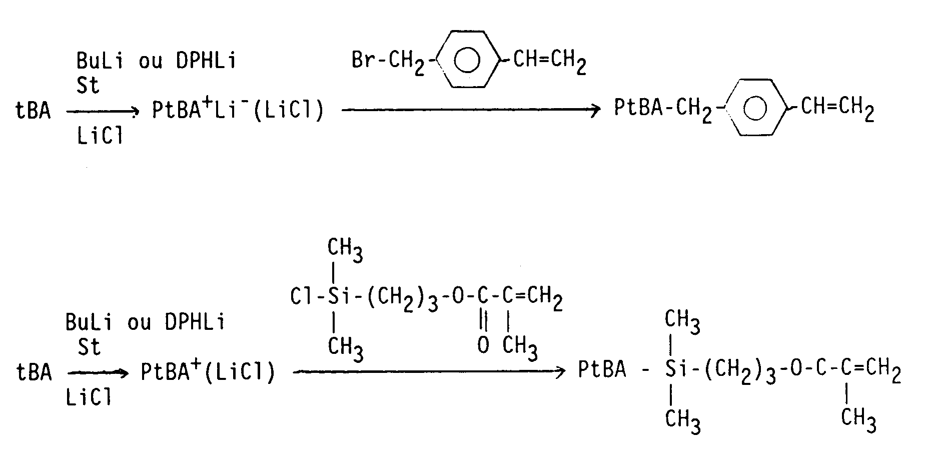

### Mode opératoire général

Dans un réacteur équipé d'une entrée d'argon, d'un thermomètre, d'un dispositif d'agitation magnétique et d'entrées spécifiques pour le solvant, l'initiateur, le monomère et le réactif de fonctionnalisation, on introduit tout d'abord la quantité nécessaire de LiCl, puis on chauffe le réacteur à environ 120°C, et on le soumet à plusieurs cycles vide-argon. Ensuite, on introduit le volume choisi de solvant THF et on neutralise avec quelques gouttes d'initiateur (si celui-ci est le BuLi, on ajoute quelques gouttes de styrène pour servir d'indicateur coloré). Ensuite, on introduit la quantité calculée de solution d'initiateur, et on refroidit la solution à -70°C (parfois à -30°C seulement). On ajoute ensuite le monomère lentement, sous contrôle permanent de la température. Quelques minutes après que l'addition de monomère ait été achevée, on prélève une partie de la solution comme échantillon et on procède à une désactivation protonique.

Au reste de la solution, on ajoute à -25°C, du bromure de p-vinylbenzyle et on poursuit la réaction pendant un laps de temps de 2 heures.

### Résultats

Selon les conditions de polymérisation spécifiées au Tableau 1 ci-après, on obtient les résultats de fonctionnalisation également spécifiés ci-après.

**Tableau 1**

| Exemple | Polymérisation | | | Fonctionnalisation par le bromure de p-vinylbenzyle | | |
|---|---|---|---|---|---|---|
| | Initiateur | Température °C * | M̅n̅** | Température °C | Durée | Remendement de f^{on} |
| 9 | BuLi | -80 | 8000 | -25 | 2 h | 100% |
| 10 | DPHLi | -40 | 10000 | -25 | 2 h | 95% |

| | | | | par le méthacrylate de chlorodiméthylsilyl éthyle | | |
|---|---|---|---|---|---|---|
| 11 | DPHLi | -40 | 8000 | -25 | 2 h | 97% |
| 12 | BuLi | -80 | 15000 | -25 | 2 h | 100% |

| | | | | | | |
|---|---|---|---|---|---|---|
| * L'addition du monomère à la solution d'initiateur est lente, ce qui permet de garder le contrôle de la température. La réaction est achevée 5 à 10 mn après la fin de l'addition. | | | | | | |
| ** L'indice de polydispersité M̅w̅/M̅n̅ est, dans tous les cas, inférieur à 1,2. | | | | | | |

## Revendications (Revendications pour l'(les) Etat(s) contractant(s) suivant(s): AT, BE, CH, DE, DK, FR, GB, GR, IT, LI, LU, NL, SE)

1. Procédé de fabrication de macromonomères (méth)acryliques fonctionnalisés, de formule :
(PA)ₙ-F ou F-PA-F
où :
- PA représente une séquence polymère issue d'un monomère A choisi parmi les monomères méthacryliques et les monomères acryliques ;
- n est un nombre entier valant 1, 2 ou 3 ;
- F est un groupement terminé par O⁻, par OH ou par un radical vinylique, avec la condition que F est un groupement terminé par O⁻ ou par OH lorsque PA est une séquence méthacrylique et n est égal à 1 ;
caractérisé par le fait que :
(a) dans une première étape, on conduit la polymérisation anionique d'un monomère A, à l'aide d'un système initiateur capable de conduire à la formation d'une séquence polymère vivante PA⁻ ou ⁻PA⁻ et constitué par au moins un amorceur monofonctionnel si l'on vise à obtenir une séquence PA⁻ ou au moins un amorceur bifonctionnel si l'on vise à obtenir une séquence ⁻PA⁻, et au moins un ligand ; et
(b) dans une seconde étape, on fait réagir le chaînon vivant ainsi obtenu avec un agent de fonctionnalisation pour obtenir un macromonomère présentant une ou deux terminaisons vinyliques ou -O⁻.

2. Procédé selon la revendication 1 caractérisé par le fait que, dans le cas où le macromonomère obtenu à l'étape (b) présente au moins une terminaison -O⁻, il est mis à réagir avec un second agent de fonctionnalisation pour obtenir un macromonomère présentant au moins une terminaison OH ou vinylique.

3. Procédé selon la revendication 2, caractérisé par le fait que, dans le cas où le macromonomère obtenu présente une terminaison vinylique, on conduit une transestérification en milieu acide des fonctions acryliques du macromonomère obtenu ou bien une hydrolyse dudit macromonomère, suivie, le cas échéant, d'une saponification.

4. Procédé selon l'une des revendications 1 à 3, caractérisé par le fait qu'on conduit l'étape (b) dans le même milieu réactionnel que l'étape (a), à une température comprise entre -78°C et 0°C, avec un rapport molaire de l'agent de fonctionnalisation à l'amorceur compris entre 1 et 10.

5. Procédé selon l'une des revendications 1 à 4, caractérisé par le fait qu'on utilise, comme agent de fonctionnalisation, un monohalogénure vinylique conduisant à un polymère de formule PA-F ou F-PA-F, suivant que l'on a utilisé un amorceur mono- ou bifonctionnel.

6. Procédé selon l'une des revendications 1 à 5, caractérisé par le fait qu'on utilise comme agent de fonctionnalisation un aldéhyde de formule 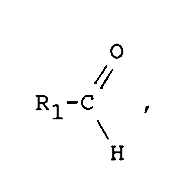 dans laquelle R₁ représente un groupe hydrocarboné, de préférence, aromatique, substitué ou non,
ce qui conduit à un macromonomère de formule : 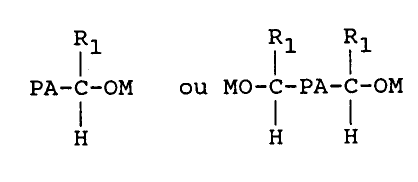 suivant que l'amorceur utilisé est mono- ou bifonctionnel, M représentant le métal de l'amorceur, les terminaisons OM pouvant être transformées en terminaisons OH par désactivation par un agent protonique, ou bien, par réaction avec un halogénure HalF′, F′ comportant une fonction vinylique terminale, en terminaisons O-F′.

7. Procédé selon l'une des revendications 1 à 6, caractérisé par le fait que l'on utilise, comme agent de fonctionnalisation, un bi- ou trihalogénure de formule (Hal)₂ ₒᵤ ₃F˝, où F˝ est un groupement à terminaison vinylique, ce qui permet d'obtenir un macromonomère de formule (PA)₂ ₒᵤ ₃-F.

8. Macromonomère de formule :
PA-F
où :
- PA représente une séquence polymère issue d'un monomère acrylique ; et
- F est un groupement terminé par OH, par O⁻ ou par un radical vinylique, présentant une masse moléculaire moyenne en nombre comprise entre environ 1000 et 300000, et un indice de polydispersité compris entre 1,05 et 1,5 environ.

9. Macromonomère de formule :
(PA)ₙ-F ou F-PA-F,
où :
- PA représente une séquence polymère issue d'un monomère A choisi parmi les monomères méthacryliques et les monomères acryliques ;
- n est un nombre entier valant 2 ou 3 ;
- F est un groupement terminé par O⁻, OH ou par un radical vinylique.

10. Macromonomère selon la revendication 9, caractérisé par le fait qu'il présente une masse moléculaire moyenne en nombre comprise entre environ 1000 et 500000, et un indice de polydispersité compris entre environ 1,05 et 2.

## Revendications (Revendications pour l'(les) Etat(s) contractant(s) suivant(s): ES)

1. Procédé de fabrication de macromonomères (méth)acryliques fonctionnalisés, de formule :
(PA)ₙ-F ou F-PA-F
où :
- PA représente une séquence polymère issue d'un monomère A choisi parmi les monomères méthacryliques et les monomères acryliques ;
- n est un nombre entier valant 1, 2 ou 3 ;
- F est un groupement terminé par O⁻, par OH ou par un radical vinylique, avec la condition que F est un groupement terminé par O⁻ ou par OH lorsque PA est une séquence méthacrylique et n est égal à 1 ;
caractérisé par le fait que :
(a) dans une première étape, on conduit la polymérisation anionique d'un monomère A, à l'aide d'un système initiateur capable de conduire à la formation d'une séquence polymère vivante PA⁻ ou ⁻PA⁻ et constitué par au moins un amorceur monofonctionnel si l'on vise à obtenir une séquence PA⁻ ou au moins un amorceur bifonctionnel si l'on vise à obtenir une séquence ⁻PA⁻, et au moins un ligand ; et
(b) dans une seconde étape, on fait réagir le chaînon vivant ainsi obtenu avec un agent de fonctionnalisation pour obtenir un macromonomère présentant une ou deux terminaisons vinyliques ou -O⁻.

2. Procédé selon la revendication 1, caractérisé par le fait que, dans le cas où le macromonomère obtenu à l'étape (b) présente au moins une terminaison -O⁻, il est mis à réagir avec un second agent de fonctionnalisation pour obtenir un macromonomère présentant au moins une terminaison OH ou vinylique.

3. Procédé selon la revendication 2, caractérisé par le fait que, dans le cas où le macromonomère obtenu présente une terminaison vinylique, on conduit une transestérification en milieu acide des fonctions acryliques du macromonomère obtenu ou bien une hydrolyse dudit macromonomère, suivie, le cas échéant, d'une saponification.

4. Procédé selon l'une des revendications 1 à 3, caractérisé par le fait qu'on conduit l'étape (b) dans le même milieu réactionnel que l'étape (a), à une température comprise entre -78°C et 0°C, avec un rapport molaire de l'agent de fonctionnalisation à l'amorceur compris entre 1 et 10.

5. Procédé selon l'une des revendications 1 à 4, caractérisé par le fait qu'on utilise, comme agent de fonctionnalisation, un monohalogénure vinylique conduisant à un polymère de formule PA-F ou F-PA-F, suivant que l'on a utilisé un amorceur mono- ou bifonctionnel.

6. Procédé selon l'une des revendications 1 à 5, caractérisé par le fait qu'on utilise comme agent de fonctionnalisation un aldéhyde de formule 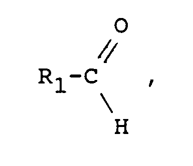 dans laquelle R₁ représente un groupe hydrocarboné, de préférence, aromatique, substitué ou non,
ce qui conduit à un macromonomère de formule : 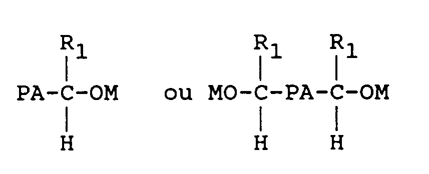 suivant que l'amorceur utilisé est mono- ou bifonctionnel, M représentant le métal de l'amorceur, les terminaisons OM pouvant être transformées en terminaisons OH par désactivation par un agent protonique, ou bien, par réaction avec un halogénure HalF′, F′ comportant une fonction vinylique terminale, en terminaisons O-F′.

7. Procédé selon l'une des revendications 1 à 6, caractérisé par le fait que l'on utilise, comme agent de fonctionnalisation, un bi- ou trihalogénure de formule (Hal)₂ ₒᵤ ₃F˝, où F˝ est un groupement à terminaison vinylique, ce qui permet d'obtenir un macromonomère de formule (PA)₂ ₒᵤ ₃-F.

8. Procédé selon l'une des revendications 1 à 6, caractérisé par le fait qu'il conduit à un macromonomère de formule :
PA-F
où :
- PA représente une séquence polymère issue d'un monomère acrylique ; et
- F est un groupement terminé par OH, par O⁻ ou par un radical vinylique, présentant une masse moléculaire moyenne en nombre comprise entre environ 1000 et 300 000, et un indice de polydispersité compris entre 1,05 et 1,5 environ.

9. Procédé selon l'une des revendications 1 à 7, caractérisé par le fait qu'il conduit à un macromonomère de formule :
(PA)ₙ-F ou F-PA-F,
où :
- PA représente une séquence polymère issue d'un monomère A choisi parmi les monomères méthacryliques et les monomères acryliques ;
- n est un nombre entier valant 2 ou 3 ;
- F est un groupement terminé par O⁻, OH ou par un radical vinylique.

10. Procédé selon la revendication 9, caractérisé par le fait qu'il conduit à un macromonomère ayant une masse moléculaire moyenne en nombre comprise entre environ 1000 et 500000, et un indice de polydispersité compris entre environ 1,05 et 2.

## Claims (Claims for the following Contracting State(s): AT, BE, CH, DE, DK, FR, GB, GR, IT, LI, LU, NL, SE)

1. Process for the manufacture of functionalized (meth)acrylic macromonomers of formula:
(PA)ₙ-F or F-PA-F
where:
- PA denotes a polymeric block originating from a monomer A chosen from methacrylic monomers and acrylic monomers,
- n is an integer whose value is 1, 2 or 3,
- F is a group ending in O⁻, in OH or in a vinyl radical, with the condition that F is a group ending in O⁻ or in OH when PA is a methacrylic block and n is equal to 1,
characterized in that:
(a) in a first stage the anionic polymerization of a monomer A is conducted with the aid of an initiating system capable of leading to the formation of a living polymeric block PA⁻ or ⁻PA⁻ and consisting of at least one monofunctional initiator if the aim is to obtain a block PA⁻ or at least one difunctional initiator if the aim is to obtain a block ⁻PA⁻, and at least one ligand, and
(b) in a second stage the living chain unit thus obtained is reacted with a functionalizing agent to obtain a macromonomer exhibiting one or two vinyl or -O⁻ ends.

2. Process according to Claim 1, characterized in that, in the case where the macromonomer obtained in stage (b) exhibits at least one -O⁻ end, it is reacted with a second functionalizing agent to obtain a macromonomer exhibiting at least one OH or vinyl end.

3. Process according to Claim 2, characterized in that, in the case where the macromonomer obtained exhibits a vinyl end, a transesterification of the acrylic functional groups of the macromonomer obtained is conducted in an acidic medium, or else a hydrolysis of the said macromonomer is conducted, followed, if appropriate, by a saponification.

4. Process according to one of Claims 1 to 3, characterized in that stage (b) is conducted in the same reaction medium as stage (a) at a temperature of between -78°C and 0°C, with a molar ratio of the functionalizing agent to the initiator of between 1 and 10.

5. Process according to one of Claims 1 to 4, characterized in that a vinyl monohalide is employed as the functionalizing agent, leading to a polymer of formula PA-F or F-PA-F, depending on whether a mono- or difunctional initiator has been employed.

6. Process according to one of Claims 1 to 5, characterized in that an aldehyde of formula 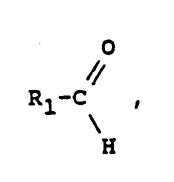 in which R₁ denotes a preferably aromatic, substituted or unsubstituted hydrocarbon group, is employed as the functionalizing agent,
which results in a macromonomer of formula: 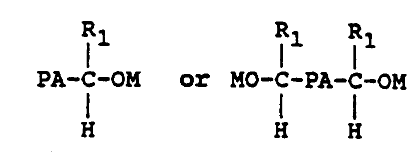 depending on whether the initiator employed is mono- or difunctional, M denoting the metal of the initiator, it being possible for the OM ends to be converted into OH ends by deactivation with a protonic agent, or else into O-F' ends by reaction with a halide HalF', F' comprising an end vinyl functional group.

7. Process according to one of Claims 1 to 6, characterized in that a di- or trihalide of formula (Hal)₂ ₒᵣ ₃F, where F'' is a group containing a vinyl end, is employed as the functionalizing agent, which makes it possible to obtain a macromonomer of formula (PA)₂ ₒᵣ ₃-F.

8. Macromonomer of formula:
PA-F
where:
- PA denotes a polymeric block originating from an acrylic monomer, and
- F is a group ending in OH, in O⁻ or in a vinyl radical, exhibiting a number-average molecular mass of between approximately 1,000 and 300,000 and a polydispersity index of approximately between 1.05 and 1.5.

9. Macromonomer of formula:
(PA)ₙ-F or F-PA-F,
where:
- PA denotes a polymeric block originating from a monomer A chosen from methacrylic monomers and acrylic monomers,
- n is an integer whose value is 2 or 3,
- F is a group ending in O⁻, OH or in a vinyl radical.

10. Macromonomer according to Claim 9, characterized in that it exhibits a number-average molecular mass of between approximately 1,000 and 500,000 and a polydispersity index of between approximately 1.05 and 2.

## Claims (Claims for the following Contracting State(s): ES)

1. Process for the manufacture of functionalized (meth)acrylic macromonomers of formula:
(PA)ₙ-F or F-PA-F
where:
- PA denotes a polymeric block originating from a monomer A chosen from methacrylic monomers and acrylic monomers,
- n is an integer whose value is 1, 2 or 3,
- F is a group ending in O⁻, in OH or in a vinyl radical, with the condition that F is a group ending in O⁻ or in OH when PA is a methacrylic block and n is equal to 1,
characterized in that:
(a) in a first stage the anionic polymerization of a monomer A is conducted with the aid of an initiating system capable of leading to the formation of a living polymeric block PA⁻ or ⁻PA⁻ and consisting of at least one monofunctional initiator if the aim is to obtain a block PA⁻ or at least one difunctional initiator if the aim is to obtain a block ⁻PA⁻, and at least one ligand, and
(b) in a second stage the living chain unit thus obtained is reacted with a functionalizing agent to obtain a macromonomer exhibiting one or two vinyl or -O⁻ ends.

2. Process according to Claim 1, characterized in that, in the case where the macromonomer obtained in stage (b) exhibits at least one -O⁻ end, it is reacted with a second functionalizing agent to obtain a macromonomer exhibiting at least one OH or vinyl end.

3. Process according to Claim 2, characterized in that, in the case where the macromonomer obtained exhibits a vinyl end, a transesterification of the acrylic functional groups of the macromonomer obtained is conducted in an acidic medium, or else a hydrolysis of the said macromonomer is conducted, followed, if appropriate, by a saponification.

4. Process according to one of Claims 1 to 3, characterized in that stage (b) is conducted in the same reaction medium as stage (a) at a temperature of between -78°C and 0°C, with a molar ratio of the functionalizing agent to the initiator of between 1 and 10.

5. Process according to one of Claims 1 to 4, characterized in that a vinyl monohalide is employed as the functionalizing agent, leading to a polymer of formula PA-F or F-PA-F, depending on whether a mono- or difunctional initiator has been employed.

6. Process according to one of Claims 1 to 5, characterized in that an aldehyde of formula 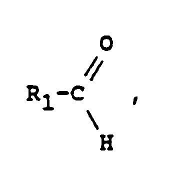 in which R₁ denotes a preferably aromatic, substituted or unsubstituted hydrocarbon group, is employed as the functionalizing agent,
which results in a macromonomer of formula: 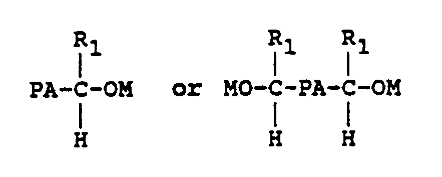 depending on whether the initiator employed is mono- or difunctional, M denoting the metal of the initiator, it being possible for the OM ends to be converted into OH ends by deactivation with a protonic agent, or else into O-F' ends by reaction with a halide HalF', F' comprising an end vinyl functional group.

7. Process according to one of Claims 1 to 6, characterized in that a di- or trihalide of formula (Hal)₂ ₒᵣ ₃F'', where F'' is a group containing a vinyl end, is employed as the functionalizing agent, which makes it possible to obtain a macromonomer of formula (PA)₂ ₒᵣ ₃F.

8. Process according to one of Claims 1 to 6, characterized in that it leads to a macromonomer of formula:
PA-F
where:
- PA denotes a polymeric block originating from an acrylic monomer, and
- F is a group ending in OH, in O⁻ or in a vinyl radical, exhibiting a number-average molecular mass of between approximately 1,000 and 300,000 and a polydispersity index of approximately between 1.05 and 1.5.

9. Process according to one of Claims 1 to 7, characterized in that it leads to a macromonomer or formula:
(PA)ₙ-F or F-PA-F,
where:
- PA denotes a polymeric block originating from a monomer A chosen from methacrylic monomers and acrylic monomers,
- n is an integer whose value is 2 or 3,
- F is a group ending in O⁻, OH or in a vinyl radical.

10. Process according to Claim 9, characterized in that it leads to a macromonomer having a number-average molecular mass of between approximately 1,000 and 500,000 and a polydispersity index of between approximately 1.05 and 2.

## Patentansprüche (Patentansprüche für folgende(n) Vertragsstaat(en): AT, BE, CH, DE, DK, FR, GB, GR, IT, LI, LU, NL, SE)

1. Verfahren zur Herstellung von funktionalisierten (Meth)acryl-Makromonomeren der allgemeinen Formel:
(PA)ₙ-F oder F-PA-F
worin
- PA einen Polymerblock, gebildet aus einem Monomer A, darstellt, welches ausgewählt ist unter Methacrylmonomeren und Acrylmonomeren;
- n für eine der ganzen Zahlen 1, 2 oder 3 steht;
- F eine Gruppe bedeutet, welche mit O⁻, OH oder einem Vinylrest endet, mit der Maßgabe, daß F mit O⁻ oder OH endet, wenn PA ein Methacrylblock ist und n für 1 steht; das dadurch gekennzeichnet ist, daß man
(a) in einem ersten Schritt die anionische Polymerisation eines Monomers A mit Hilfe eines Initiatorsystems durchführt, das zur Bildung eines Lebend-Polymerblockes PA⁻ oder ⁻PA⁻ befähigt ist und aus mindestens einem monofunktionellen Starter, wenn die Bildung eines Blocks PA⁻ beabsichtigt ist, oder aus mindestens einem bifunktionellen Starter, wenn die Bildung eines Blocks ⁻PA⁻ beabsichtigt ist, und aus mindestens einem Liganden besteht; und
(b) in einem zweiten Schritt die auf diese Weise erhaltene Lebend-Kette mit einem Funktionalisierungsreagens reagieren läßt, um ein Makromonomer zu erhalten, welches ein oder zwei Vinyl- oder O⁻-Enden aufweist.

2. Verfahren nach Anspruch 1, dadurch gekennzeichnet, daß man, wenn das gemäß Stufe (b) erhaltene Makromonomer mindestens ein O⁻-Ende aufweist, es mit einem zweiten Funktionalisierungsreagens zu einem Makromonomer umsetzt, welches mindestens ein OH- oder Vinylende aufweist.

3. Verfahren nach Anspruch 2, dadurch gekennzeichnet, daß man, wenn das erhaltene Makromonomer ein Vinylende aufweist, eine Umesterung der Acrylfunktionen des erhaltenen Makromonomers in saurem Milieu oder eine Hydrolyse des Makromonomers, gegebenenfalls gefolgt von einer Verseifung, durchführt.

4. Verfahren nach einem der Ansprüche 1 bis 3, dadurch gekennzeichnet, daß man Stufe (b) in dem gleichen Reaktionsmedium wie Stufe (a) bei einer Temperatur im Bereich von -78 bis 0°C durchführt, wobei das molare Verhältnis von Funktionalisierungsmittel zu Starter im Bereich von 1 bis 10 liegt.

5. Verfahren nach einem der Ansprüche 1 bis 4, dadurch gekennzeichnet, daß man als Funktionalisierungsmittel ein Vinylmonohalogenid verwendet, welches zur Bildung eines Polymers der allgemeinen Formel PA-F oder F-PA-F führt, je nachdem, ob ein mono- oder bifunktioneller Starter verwendet wird.

6. Verfahren nach einem der Ansprüche 1 bis 5, dadurch gekennzeichnet, daß man als Funktionalisierungsmittel einen Aldehyd der allgemeinen Formel 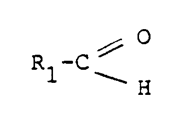 verwendet, worin R₁ einen Kohlenwasserstoffrest, vorzugsweise einen gegebenenfalls substituierten, aromatischen Rest bedeutet, wobei ein Makromonomer der allgemeinen Formel: 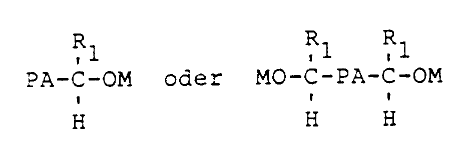 gebildet wird,
je nachdem, ob der verwendete Starter mono- oder bi-funktionell ist, worin M das Metall des Starters ist und wobei die Enden OM durch Desaktivierung mit einem protischen Mittel zu OH-Enden oder durch Reaktion mit einem Halogenid HalF', worin F' eine terminale Vinylfunktion bedeutet, zu einem O-F'-Ende überführt werden können.

7. Verfahren nach einem der Ansprüche 1 bis 6, dadurch gekennzeichnet, daß man als Funktionalisierungsmittel ein Bi- oder Trihalogenid der allgemeinen Formel (Hal)₂ _{oder} ₃F'', verwendet, worin F'' eine Vinylendgruppe bedeutet, wobei man ein Makromonomer der allgemeinen Formel (PA)₂ _{oder} ₃-F erhält.

8. Makromonomer der allgemeinen Formel:
PA-F
**dadurch gekennzeichnet,** daß
- PA einen Polymerblock auf der Basis eines Acrylmonomers bedeutet; und
- F eine Gruppe bedeutet, welche eine endständige OH-, O⁻-Gruppe oder einen Vinylrest aufweist und eine zahlengemittelte Molekülmasse etwa im Bereich von 1000 bis 300 000 besitzt und einen Polydispersitätsindex im Bereich von etwa 1,05 bis 1,5 aufweist.

9. Makromonomer der allgemeinen Formel:
(PA)ₙ-F oder F-PA-F
**dadurch gekennzeichnet,** daß
- PA einen Polymerblock auf der Basis eines Monomers A bedeutet, welches ausgewählt ist unter Methacrylmonomeren und Acrylmonomeren;
- n einen der ganzzahligen Werte 2 oder 3 bedeutet; und
- F eine Gruppe bedeutet, die einen endständigen O⁻-, OH- oder Vinylrest aufweist.

10. Makromonomer nach Anspruch 9, dadurch gekennzeichnet, daß es eine zahlengemittelte Molekülmasse im Bereich von etwa 1000 bis 500 000 und einen Polydispersitätsindex im Bereich von etwa 1,05 bis 2 besitzt.

## Patentansprüche (Patentansprüche für folgende(n) Vertragsstaat(en): ES)

1. Verfahren zur Herstellung von funktionalisierten (Meth)
acryl-Makromonomeren der allgemeinen Formel:
(PA)ₙ-F oder F-PA-F
worin
- PA einen Polymerblock, gebildet aus einem Monomer A, darstellt, welches ausgewählt ist unter Methacrylmonomeren und Acrylmonomeren;
- n für eine der ganzen Zahlen 1, 2 oder 3 steht;
- F eine Gruppe bedeutet, welche mit O⁻, OH oder einem Vinylrest endet, mit der Maßgabe, daß F mit O⁻ oder OH endet, wenn PA ein Methacrylblock ist und n für 1 steht; das dadurch gekennzeichnet ist, daß man
(a) in einem ersten Schritt die anionische Polymerisation eines Monomers A mit Hilfe eines Initiatorsystems durchführt, das zur Bildung eines Lebend-Polymerblockes PA⁻ oder ⁻PA⁻ befähigt ist und aus mindestens einem monofunktionellen Starter, wenn die Bildung eines Blocks PA⁻ beabsichtigt ist, oder aus mindestens einem bifunktionellen Starter, wenn die Bildung eines Blocks ⁻PA⁻ beabsichtigt ist, und aus mindestens einem Liganden besteht; und
(b) in einem zweiten Schritt die auf diese Weise erhaltene Lebend-Kette mit einem Funktionalisierungsreagens reagieren läßt, um ein Makromonomer zu erhalten, welches ein oder zwei Vinyl- oder O⁻-Enden aufweist.

2. Verfahren nach Anspruch 1, dadurch gekennzeichnet, daß man, wenn das gemäß Stufe (b) erhaltene Makromonomer mindestens ein O⁻-Ende aufweist, es mit einem zweiten Funktionalisierungsreagens zu einem Makromonomer umsetzt, welches mindestens ein OH- oder Vinylende aufweist.

3. Verfahren nach Anspruch 2, dadurch gekennzeichnet, daß man, wenn das erhaltene Makromonomer ein Vinylende aufweist, eine Umesterung der Acrylfunktionen des erhaltenen Makromonomers in saurem Milieu oder eine Hydrolyse des Makromonomers, gegebenenfalls gefolgt von einer Verseifung, durchführt.

4. Verfahren nach einem der Ansprüche 1 bis 3, dadurch gekennzeichnet, daß man Stufe (b) in dem gleichen Reaktionsmedium wie Stufe (a) bei einer Temperatur im Bereich von -78 bis 0°C durchführt, wobei das molare Verhältnis von Funktionalisierungsmittel zu Starter im Bereich von 1 bis 10 liegt.

5. Verfahren nach einem der Ansprüche 1 bis 4, dadurch gekennzeichnet, daß man als Funktionalisierungsmittel ein Vinylmonohalogenid verwendet, welches zur Bildung eines Polymers der allgemeinen Formel PA-F oder F-PA-F führt, je nachdem, ob ein mono- oder bifunktioneller Starter verwendet wird.

6. Verfahren nach einem der Ansprüche 1 bis 5, dadurch gekennzeichnet, daß man als Funktionalisierungsmittel einen Aldehyd der allgemeinen Formel 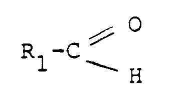 verwendet, worin R₁ einen Kohlenwasserstoffrest, vorzugsweise einen gegebenenfalls substituierten,aromatischen Rest bedeutet, wobei ein Makromonomer der allgemeinen Formel: 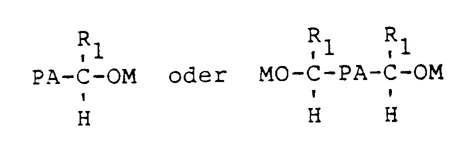 gebildet wird,
je nachdem, ob der verwendete Starter mono- oder bi-funktionell ist, worin M das Metall des Starters ist und wobei die Enden OM durch Desaktivierung mit einem protischen Mittel zu OH-Enden oder durch Reaktion mit einem Halogenid HalF', worin F' eine terminale Vinylfunktion bedeutet, zu einem O-F'-Ende überführt werden können.

7. Verfahren nach einem der Ansprüche 1 bis 6, dadurch gekennzeichnet, daß man als Funktionalisierungsmittel ein Bi- oder Trihalogenid der allgemeinen Formel (Hal)₂ _{oder} ₃F'', verwendet, worin F'' eine Vinylendgruppe bedeutet, wobei man ein Makromonomer der allgemeinen Formel (PA)₂ _{oder} ₃-F erhält.

8. Verfahren nach einem der Ansprüche 1 bis 7, dadurch gekennzeichnet daß man ein Makromonomer der allgemeinen Formel :
PA-F
erhält, worin :
- PA einen Polymerblock auf der Basis eines Acrylmonomers bedeutet; und
- F eine Gruppe bedeutet, welche eine endständige OH-, O⁻-Gruppe oder einen Vinylrest aufweist und eine zahlengemittelte Molekülmasse etwa im Bereich von 1000 bis 300 000 besitzt und einen Polydispersitätsindex im Bereich von etwa 1,05 bis 1,5 aufweist.

9. Verfahren nach einem der Ansprüche 1 bis 7, dadurch gekennzeichnet daß man ein Makromonomer der allgemeinen Formel :
(PA)ₙ-F oder F-PA-F
erhält, worin :
- PA einen Polymerblock auf der Basis eines Monomers A bedeutet, welches ausgewählt ist unter Methacrylmonomeren und Acrylmonomeren;
- n einen der ganzzahligen Werte 2 oder 3 bedeutet; und
- F eine Gruppe bedeutet, die einen endständigen O⁻-, OH-oder Vinylrest aufweist.

10. Verfahren nach Anspruch 9, dadurch gekennzeichnet daß man ein Makromonomer erhält, welches eine zahlengemittelte Molekülmasse im Bereich von etwa 1000 bis 500 000 und einen Polydispersitätsindex im Bereich von etwa 1,05 bis 2 besitzt.
